## Europäisches Patentamt

## European Patent Office

## Office européen des brevets

(11) Veröffentlichungsnummer: **0 307 678**

**A1**

# EUROPÄISCHE PATENTANMELDUNG

(21) Anmeldenummer: **88113840.8**

(22) Anmeldetag: **25.08.88**

(51) Int. Cl.⁴: **C02F 11/00 , C02F 11/12**

(30) Priorität: **12.09.87 DE 3730699**

(43) Veröffentlichungstag der Anmeldung:
**22.03.89 Patentblatt 89/12**

(84) Benannte Vertragsstaaten:
**AT BE CH DE ES FR GB GR IT LI LU NL SE**

(71) Anmelder: **Still Otto GmbH**
**Christstrasse 9 Postfach 10 18 50**
**D-4630 Bochum 1(DE)**

(72) Erfinder: **Stalherm, Dieter, Dr.**
**Doriderweg 14**
**D-4350 Recklinghausen(DE)**
Erfinder: **Dungs, Horst**
**Am Düngelbruch 21**
**D-4690 Herne(DE)**
Erfinder: **Schumacher, Werner, Dr.**
**Friedrich-Ebert-Strasse 30**
**D-4354 Datteln(DE)**

(74) Vertreter: **Dahlkamp, Heinrich-Leo, Dipl.-Ing.**
**c/o Still Otto GmbH Patentabteilung**
**Christstrasse 9 Postfach 10 18 50**
**D-4630 Bochum 1(DE)**

(54) **Verfahren zur Entsorgung von Klärschlamm und/oder Industrieschlämmen mit organischen Anteilen.**

(57) Die Erfindung bezieht sich auf ein Verfahren zur Entsorgung von Klär- und/oder Industrieschlämmen mit organischen Anteilen in folgenden Verfahrensschritten:

a) Vorentwässerung, vorzugsweise mechanisch und ohne Filterhilfsmittel;

b) thermische Trocknung (5) bei 110 bis 140 °C, vorzugsweise 120 bis 130 °C, auf einen Restwassergehalt (bezogen auf die Trockensubstanz) von 2 bis 5 %, vorzugsweise 2 bis 3 %;

c) kontinuierliche Niedertemperaturkonvertierung (10) bei 280 bis 420 °C, vorzugsweise 300 bis 380 °C, wobei das Material mit dem unter Merkmal b) angegebenen Restwassergehalt eingegeben wird.

EP 0 307 678 A1

## Patentanmeldung

Verfahren zur Entsorgung von Klärschlämmen und/oder Industrieschlämmen mit organischen Anteilen

Die Erfindung bezieht sich auf ein Verfahren zur Entsorgung von Klärschlämmen und/oder Industrieschlämmen mit organischen Anteilen.

Die Beseitigung von aus der biologischen Abwasserreinigung stammenden Klärschlämmen wird in zunehmendem Maße problematischer und teurer. Da in nächster Zeit Deponieraum knapp wird und der landwirtschaftlichen Entsorgung strenge Auflagen bezüglich der Inhaltsstoffe auferlegt werden, wird es in Zukunft darauf ankommnen, die anfallenden kommunalen Klärschlämme sowie Industrieschlämme mit organischen Anteilen volumenmäßig durch Trocknung zu reduzieren und den organischen und anorganischen Anteil des Schlammes zu nutzen. Diese Anteile sollen dabei in wiederverwendbare und marktfähige Produkte umgewandelt werden. Das gleiche soll auch für die bereits deponierten Schlämme gelten.

Bekannt sind Verfahren zur Klärschlammverbrennung, wobei eine maximale Volumenverminderung möglich ist, da bei der Verbrennung der gesamte Klärschlamm, bis auf den anorganischen Rückstand, umgesetzt wird. Bei den hohen Reaktionstemperaturen der Schlammverbrennung ist mit einer Mobilisierung der im Klärschlamm enthaltenen Schwermetalle zu rechnen. $SO_2$ und $NO_x$ müssen gegebenenfalls in nachgeschalteten Rauchgasreinigungsanla gen entfernt werden. Schließlich kann auch bei den höheren Temperaturen eine Bildung von Dioxinen nicht ausgeschlossen werden. Bei der Klärschlammpyrolyse wird unter Sauerstoffausschluß oder großem Sauerstoffunterschuß bei Temperaturen zwischen 550 und 800 °c gearbeitet. Die Pyrolyseprodukte, z. B. "Öle", setzten sich aus Teeren und aromatischen Kohlenwasserstoffen, z. B. Benzol, zusammen. Auch hierbei kann die Bildung von hochgiftigen Bestandteilen aufgrund der jeweiligen Verfahrensbedingungen nicht ausgeschlossen werden.

Aus der EP-PS 0 052 334 ist eine Niedertemperatur-Klärschlammkonvertierung bekannt, wobei zur Gewinnung von festen, flüssigen und gasförmigen Brennstoffen unter Anwendung erhöhter Temperatur und unter Luftausschluß die Materialien, wie z. B. Klärschlamm oder Faulschlamm, mit einer Geschwindigkeit von 5 bis 30 °C/min auf eine Konvertierungstemperatur von 200 bis 400 °c erhitzt werden. Im Gegensatz zur Verbrennung und Pyrolyse arbeitet die Niedertemperatur-Klärschlammkonvertierung im Temperaturbereich unterhalb 400 °C, so daß lediglich aliphatische Kohlenwasserstoffe, jedoch keine aromatischen Kohlenwasserstoffe entstehen. Bei den bisher bekannten Verfahrensweisen wird der Schlamm nach der mechanischen Entwässerung direkt in den Konvertierungsofen gegeben. Der Wassergehalt des Schlammes beträgt dabei minmal ca. 60 %, so daß bei der Konvertierung eine große Menge an hochbelastetem Wasser frei wird und als Abwasser einer Entsorgung zugeleitet werden muß. In der Literaturstelle "Öl aus Klärschlamm" von E. Bayer; M. Kuttubuddin in Korrespondenzabwasser 6/82, 29. Jg., Seite 377 bis 388, wird über Laborversuche zur Gewinnung von Öl aus Klärschlamm berichtet, wobei in einer Energiebilanz der Konvertierung von einem Wassergehalt von 10 bis 15 % ausgegangen wurde. Über die Entsorgung der bei der Konvertierung entstehenden, immer noch relativ großen Menge an Brüden ist dabei nichts gesagt.

Aufgabe der Erfindung ist es nun, ein umweltfreundliches und kostengünstiges Verfahren zur Entsorgung von Klärschlämmen und/oder Industrieschlämmen mit organischen Anteilen vorzu schlagen, wobei insbesondere die Entstehung von zu stark belastetem Abwasser vermieden wird.

Zur Lösung dieser Aufgabe werden die im Hauptanspruch angegebenen Verfahrensschritte vorgeschlagen. Die Unteransprüche 2 bis 9 enthalten sinnvolle Weiterentwicklungen des Verfahrens. Hierbei soll der mechanischen Entwässerung, die insbesondere ohne Filterhilfsmittel arbeitet und somit den Wassergehalt bei Faulschlämmen nur auf ca. 75 % senkt, eine thermische Trocknung des Schlammes folgen, die bei Temperaturen von 110 bis 140 °C, vorzugsweise 120 bis 130 °C, arbeitet. Die Trocknung des Schlammes bei dieser Temperatur sorgt dafür, daß das ausgetriebene Wasser organisch nicht so stark belastet ist. Hierdurch ist eine einfachere und sichere Entsorgung gewährleistet. Außerdem wird der Wassergehalt des Schlammes bis auf 2 bis 5 %, vorzugsweise 2 bis 3 %, gesenkt, so daß so wenig Wasser wie möglich in die bei Temperaturen von 280 bis 420 °C, vorzugsweise 300 bis 380 °C, arbeitende Niedertemperaturkonvertierung eingebracht wird. Bei der mechanischen Vorentwässerung wird bewußt auf eine Zugabe von Filterhilfsmitteln verzichtet, um den anschließenden Konversionsprozeß nicht unnötig mit Ballaststoffen zu beladen und auf der Kläranlage Kosten einzusparen.

Für die thermische Trocknung wird das Konzept einer direkt arbeitenden Wirbelschichttrocknung vorgeschlagen. Der vorentwässerte Schlamm kann dabei direkt in die mit Rauchgasen beheizte, direkt arbeitende Wirbelschicht eindosiert werden, wobei zur Wärmeübertragung ein feinkörniges Wirbelmedium, z. B. Sand, dient. Bei der direkt arbeitenden Wirbelschichttrocknung kann auf einen Granulierungsprozeß, d. h. eine Vorbehandlung des Schlammes vor dem Einsatz in die Wirbelschicht, verzichtet werden. Im Gegensatz zur indirekt arbeitenden Wirbelschicht ist hier nicht der vorbehandelte Schlamm das Wirbelmedium, sondern der auch für die Wärmeübertragung benutzte Quarzsand. Erfindungsgemäß kann auch mechanisch unbehandelter Frischschlamm oder Belebtschlamm mit einem Wassergehalt von mehr als 95 % in die Wirbelschicht eingepumpt werden. Durch die Entwässerung bis auf einen Restwassergehalt von 2 bis 3 % wird sichergestellt, daß so wenig Wasser wie möglich in die bei ca. 400 °C arbeitende Konvertierung eingebracht wird. Somit wird das Problem der Entsorgung von mit organischen Stoffen belastetem Abwasser (Reaktionswasser) auf ein Minimum (ca. 2 bis 3 % bezogen auf Trockensubstanz) beschränkt. Die bei der Trocknung anfallenden Brüden können aufgrund der unbedenklichen B SB$_5$- und CSB-Werte direkt oder nach Kondensation dem Klärbecken oder dem Kläranlagenzulauf zugeleitet werden.

Die nach der Trocknung anfallenden Schlämme werden erfindungs-gemäß direkt unter Luftabschluß zur Niedertemperaturkonvertierung z. B. mit Hilfe einer Förderschnecke transportiert. Die Konvertierung erfolgt in einer indirekt beheizten Drehtrommel, wobei die über elektrische Heizstäbe erhitzte Luft im Umwälzbetrieb an dem Trommelmantel vorbeigeführt wird. Dieses System stellt im Vergleich zu anderen Systemen, insbesondere direkt beheizten Anlagen, eine umweltschonende Lösung dar. Die Erzeugung von Abgasen und damit deren Reinigung wird auf ein Minimum beschränkt. Dies führt u. a. zu einer wesentlich kompakteren Bauweise der Konvertierungsanlage. Zur Optimierung der Öloder Koksausbeute kann die im Umwälzbetrieb an dem Trommelmantel vorbeigeführte Luft für eine auf den jeweils eingesetzten Klärschlamm abgestimmte Endtemperatur bei der Konvertierung eingestellt werden. Die Trommel wird dabei in getrennt steuerbaren Erhitzungszonen durch über die Trommellänge separat angeordnete Umluftgebläse indirekt beheizt.

Die bei der Niedertemperaturkonvertierung anfallenden trockenen Substanzen können z. B. als Festbrennstoff in Asphaltaufbereitungsanlagen verwendet werden. Bei dieser Verwendung werden die im Rückstand enthaltenen Schwermetalle rückstandslos im Asphalt eingebunden und können somit nicht eluiert, d. h. nicht ausgewaschen werden. Das anfallende Konversionsöl kann einmal als Brennstoff mit einem Heizwert, der in etwa dem des Diesels entspricht, eingesetzt werden. Eine höhere Wertschöp fung für das Öl ist jedoch durch eine Weiterverarbeitung des Öls zu erzielen. Im Gegensatz xu Mineralölen besitzt das Konversionsöl einen hohen Anteil an Fettsäuren, wobei eine Trennung des Öls in seine Bestandteile Fettsäure und Kohlenwasserstoffe möglich ist.

Die Konversionsgase können thermisch gereinigt und in die Umwelt entlassen werden. Ein Teil der Gasfraktion kann aber auch verbrannt werden und damit der Energieerzeugung dienen.

Anwendungsbeispiel:

Bei dem erfindungsgemäßen Verfahren wird Klärschlamm in einer Menge von 1,75 t/h mit einem Trockensubstanzgehalt vön ca. 25 % aus den auf den Kläranlagen üblicherweise vorhandenen Einrichtungen zur Faulung und/oder Vorentwässerung entnommen und sofort der thermischen Trochnung zugeführt. Dort wird es in einer direkt arbeitenden Wirbelschicht bei Temperaturen von 120 bis 130 °C auf einen Restwassergehalt von 2 bis 3 % getrocknet. Die bei dem Trocknungsprozeß mit einer Menge von ca. 1290 bis 1300 kg/h freiwerdenden Brüden können aufgrund niedriger CSB- und BSB$_5$-Werte wieder zur Kläranlage zurückgeführt werden. Die auf 2 bis 3 % Wasser entwässerten Schlämme werden nach der Trocknung direkt unter Luftabschluß über eine Förderschnecke der direkt arbeitenden Drehtrommel zugeführt, in der bei Temperaturen bis zu 400 °C die Trockensubstanz (ca. 437 kg/h) konvertiert wird. Bei der Konvertierung werden stündlich ca. 150 kg Öl mit einem hohen verwertbaren Fettsäureanteil, bis zu 300 kg fester kohlenstoffhaltiger Rückstand, bis zu 20 kg Gas und bis zu 20 kg Wasser frei. Die Entsorgung des hochbelasteten Wassers, z. B. über Eindampfen, bereitet aufgrund der geringen Menge keine großen Kosten und Probleme.

Die Erfindung wird anhand des beigefügten Blockschaltbildes sowie der zugehörigen Bezugszeichenliste beispielsweise näher erläutert. Die erfindungsgemäße thermische Trocknung erfolgt in einer Sandwirbelschicht (5) mit Hilfe eines über die Leitung (4) zugeführten heißen Rauchgases. Dieses Rauchgas wird in der Brennkammer (3) durch Verbrennung von Luft (1) und Heizgas (2) erzeugt. Die Schlammaufgabe erfolgt über die Leitung (6) zur Sandwirbelschicht (5). Am oberen Ende der Sandwirbelschicht (5) werden die Trockensubstanz und die Brüden über die Leitung (7) abgezogen und dem Materialabscheider (8) zugeführt. Die Trockensubstanz wird mit einem Wassergehalt von 2 bis 3 % über die Aufgabe (9) z. B. mit einer geschlossenen Transportschnecke am oberen Ende in die indirekt beheizte Drehtrommel (10) gegeben. Am entgegengesetzten Ende der Drehtrommel wird unten der kohlenstoffhaltige Rückstand (11) abgezogen und zur weiteren Entsorgung geleitet, während die anderen Produkte über einen Einspritzkondensator (12) zum Flüssig/Flüssig/Gas-Trennbehälter (13) geführt werden aus dem Gas (14), Wasser (15) und Öl (16) getrennt abgezogen werden. Die im Materialabscheider abgetrennten Rauchgase und Brüden werden über die Leitung (17) teilweise zur Brennkammer (3) zurückgeführt. Über die Leitung (18) werden überschüssige Brüden ausgeschleust.

Bezugszeichenliste

(1) Verbrennungsluft
(2) Heizgas
(3) Brennkammer
(4) Rauchgas
(5) Sandwirbelschicht
(6) Schlammaufgabe
(7) Trockensubstanz- und Brüdenabzug
(8) Materialabscheider
(9) Trockensubstanzaufgabe
(10) indirekt beheizte Drehtrommel
(11) kohlenstoffhaltiger Rückstand
(12) Einspritzkondensator
(13) Flüssig/Flüssig/Gas-Trennbehälter
(14) Gasabzug
(15) Wasserabzug
(16) Ölabzug
(17) Rauchgas- und Brüdenrückführung
(18) Brüdenausschleusung

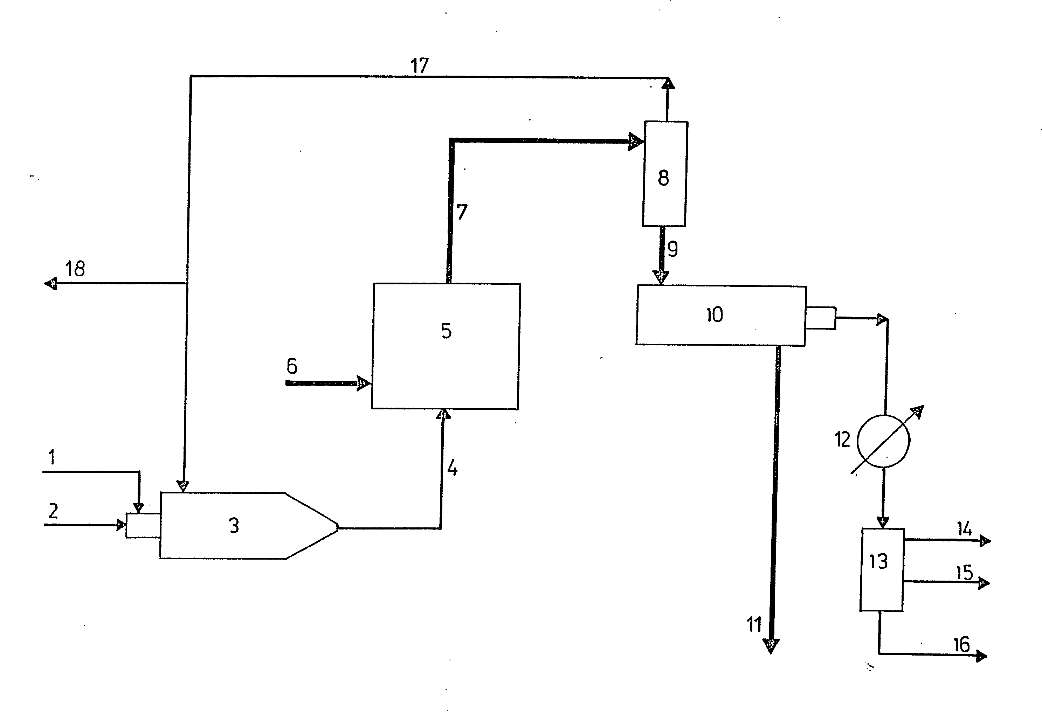

**Ansprüche**

1. Verfahren zur Entsorgung von Klärschlämmen und/oder Industrieschlämmen mit organischen Anteilen in folgenden Verfahrensschritten:

a) Vorentwässerung, vorzugsweise mechanisch und ohne Filterhilfsmittel;

b) thermische Trocknung bei 110 bis 140 °C, vorzugsweise 120 bis 130 °C, auf einen Restwassergehalt (bezogen auf die Trockensubstanz) von 2 bis 5 %, vorzugsweise 2 bis 3 %;

c) kontinuierliche Niedertemperaturkonvertierung bei 280 bis 420 °C, vorzugsweise 300 bis 380 °C, wobei das Material mit dem unter Merkmal b) angegebenen Restwassergehalt eingegeben wird.

2. Verfahren nach Anspruch 1, **dadurch gekennzeichnet**, daß die Trocknung nach Merkmal b) in einem direkt arbeitenden, vorzugsweise mit Rauchgas beheizten Wirbelschichttrockner erfolgt, wobei zur Wärmeübertragung ein feinkörniges Wirbelmedium, z. B. Sand, dient.

3. Verfahren nach Anspruch 1 oder 2, **dadurch gekennzeichnet**, daß die nach der Trocknung anfallenden Brüden direkt oder nach Kondensation dem Klärbekken oder dem Kläranlagenzulauf zugeleitet wird.

4. Verfahren nach den Ansprüchen 1 bis 3, **dadurch gekennzeichnet**, daß die nach der Trocknung gemäß Merkmal b) anfallenden Schlämme direkt unter Luftabschluß zur Niedertemperaturkonvertierung transportiert werden.

5. Verfahren nach den Ansprüchen 2 bis 4, **dadurch gekennzeichnet**, daß mechanisch unbehandelter Frischschlamm oder Belebtschlamm mit einem Wassergehalt von mehr als 95 % in die Wirbelschichttrocknung eingepumpt wird.

6. Verfahren nach Anspruch 1, **dadurch gekennzeichnet**, daß die Niedertemperaturkonvertierung in einer indirekt beheizten Drehtrommel erfolgt, wobei die über die elektrischen Heizstäbe erhitzte Luft im Umwälzbetrieb an dem Trommelmantel vorbeigeführt wird.

7. Verfahren nach Anspruch 6, **dadurch gekennzeichnet**, daß die Drehtrommel in getrennt steuerbaren Erhitzungszonen durch über die Trommellänge separat angeordnete Umluftgebläse indirekt beheizt wird.

8. Verfahren nach Anspruch 6 oder 7, **dadurch gekennzeichnet**, daß zur Optimierung der Ausbeute an Öl oder andere verwertbare Produkte für jeden Klärschlamm eine spezielle Aufheizgeschwindigkeit und/oder Konvertierungsendtemperatur eingestellt wird.

9. Verfahren nach den Ansprüchen 1 bis 8, **dadurch gekennzeichnet**, daß die bei der Niedertemperaturkonvertierung anfallenden trockenen Substanzen, als Festbrennstoff in Asphaltaufbereitungsanlagen verwendet werden und dabei u. a. Ascherückstände, einschließlich eventueller Schwermetalle in den Asphalt eingebunden, und dadurch nicht eluierbar entsorgt werden.

EP 0 307 678 A1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 88113840.8 |
| X | US - A - 4 618 735 (BRIDLE et al.)<br>* Zusammenfassung; Anspruch 1; Spalte 7, Zeile 54 - Spalte 8, Zeile 57 *<br>-- | 1,4,6, 7 | C 02 F 11/00<br>C 02 F 11/12 |
| A | US - A - 4 657 681 (HUGHES et al.)<br>* Zusammenfassung; Spalte 2, Zeilen 30-49 *<br>-- | 1 | |
| P,A | EP - A2 - 0 254 024 (WERNER & PFLEIDERER)<br>* Ansprüche 1,2 *<br>-- | 1 | |
| A | DE - A1 - 2 357 429 (FRIEDRICH UHDE)<br>* Anspruch *<br>-- | 1,2 | RECHERCHIERTE SACHGEBIETE (Int. Cl.4) |
| A | DE - A1 - 2 708 228 (COAL INDUSTRY)<br>* Anspruch 1 *<br>---- | 1,2 | C 02 F<br>F 23 G |

Der vorliegende Recherchenbericht wurde für alle Patentansprüche erstellt.

| Recherchenort | Abschlußdatum der Recherche | Prüfer |
|---|---|---|
| WIEN | 15-12-1988 | WILFLINGER |